Europäisches Patentamt

(19) European Patent Office

Office européen des brevets

(11) Publication number: **0 125 095**
**B1**

(12) **EUROPEAN PATENT SPECIFICATION**

(45) Date of publication of patent specification: **28.01.87**

(51) Int. Cl.⁴: **H 04 L 11/16**

(21) Application number: **84302935.6**

(22) Date of filing: **01.05.84**

(54) Packet communication system.

(30) Priority: **06.05.83 JP 78957/83**
**06.05.83 JP 78959/83**

(43) Date of publication of application:
**14.11.84 Bulletin 84/46**

(45) Publication of the grant of the patent:
**28.01.87 Bulletin 87/05**

(84) Designated Contracting States:
**DE FR GB**

(56) References cited:
**US-A-4 063 220**
**US-A-4 234 952**

**ELEKTRONIK, vol. 31, no. 19, 24th September
1982, pages 99-103, München, DE; Dr. K.
DIEBENBUSCH: "Ethernet: Grundlagen -
Eigenschaften - Möglichkeiten"
DIGEST OF PAPERS SPRING COMPCON 83,
28th February - 3rd March 1983, pages 510-517,
IEEE, New York, USA; M. STARK et al.: "A high
functionality VLSI LAN controller for CSMA/CD
network"**

(73) Proprietor: **Kabushiki Kaisha Toshiba
72, Horikawa-cho Saiwai-ku
Kawasaki-shi Kanagawa-ken 210 (JP)**

(72) Inventor: **Yoneda, Kiyoshi c/o Patent Division
Kabushiki Kaisha Toshiba 1-1 Shibaura 1-chome
Minato-ku Tokyo 105 (JP)**
Inventor: **Fujihara, Mutsumi c/o Patent Division
Kabushiki Kaisha Toshiba 1-1 Shibaura 1-chome
Minato-ku Tokyo 105 (JP)**

(74) Representative: **Freed, Arthur Woolf et al
MARKS & CLERK 57-60 Lincoln's Inn Fields
London WC2A 3LS (GB)**

### Description

The present invention relates to a packet communication system in which the packed communication with high efficiency is realized by controlling the transmission of the data packets on the basis of a carrier sense multiple access with collision detection (CSMA/CD) method.

Recently, a distributed processing system has been featured whereby a plurality of data processing units are mutually coupled through a data channel to constitute a local area network, and whereby predetermined data processing is performed by allowing other data processing units to utilize the information stored in the memory, in the I/O device or the like which each data processing unit has. In this local area network, in order to enable all of the data processing units connected to the data channel to commonly utilize the data channel, it is required that these data processing units do not mutually interfere with the others' communication. For this purpose, the CSMA/CD method has been frequently used.

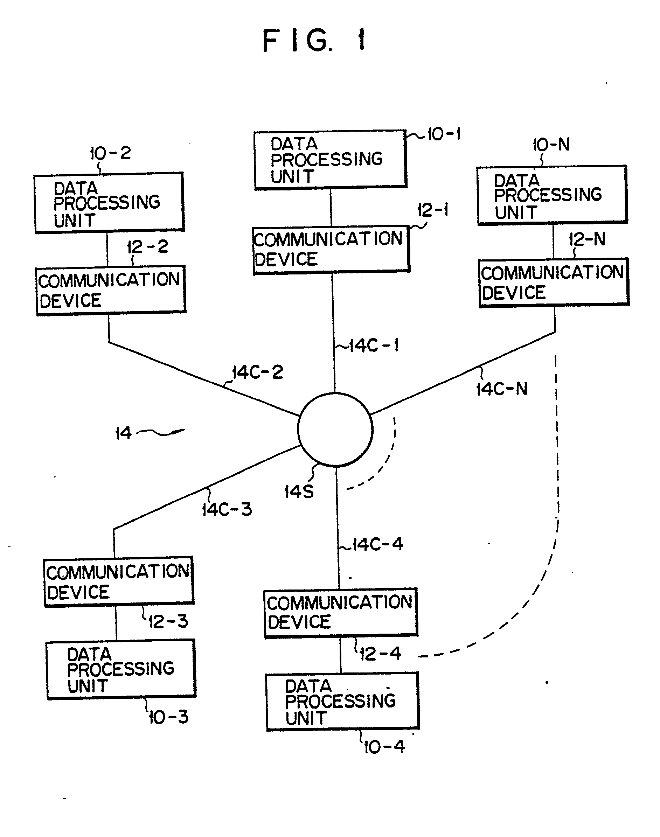

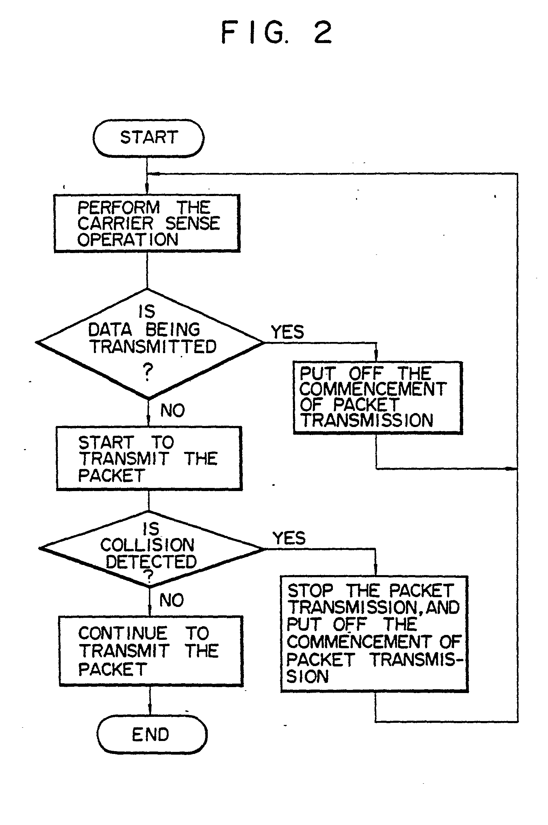

Fig. 1 shows a conventional local area network. This local area network is constituted by connecting, e.g., a plurality of data processing units 10—1 to 10—N to data channel 14 through communication devices 12—1 to 12—N, which are referred to as stations. This data channel 14 is constituted by a plurality of optical fiber cables 14C—1 to 14C—N and a star coupler 14S for mutually connecting these optical fiber cables. Each communication device transmits the data packet of a bit string on the order of several kilobits through this data channel 14. In order to transmit data packets, communication devices 12—1 to 12—N holding at least one packet to transmit execute the procedure steps of the CSMA/CD method independently of one another, as shown in Fig. 2, and thus control the transmission of the data packet.

Prior to transmitting the data packet, each communication device holding a packet to transmit executes the carrier sense operation to check whether the data is being sent through the data channel 14 or not, i.e., to check the presence or absence of a carrier signal in the data channel 14. When the presence of the carrier signal in the data channel 14 is detected, the communication device does not transmit the packet, but rather postpones the transmission of this packet. This postponement is generally called deferment. In the carrier sense operation, when the absence of the carrier signal in the data channel 14 is detected, the communication device starts transmitting the data packet. Thereafter, the communication device checks to see if the data packet transmitted therefrom has collided with data packets from other communicaiton devices which may occur when two or more stations start transmission almost simultaneously. As long as no collision among data packets has been detected, the communication device continues transmitting the data packet. On the other hand, when collision among data packets is detected, the communication device suspends the transmission of the data packet. Then the station puts off the transmission of the data packet. This postponement is usually called back-off. In the description hereinafter, it is assumed that the term, "back-off", is used as a general term to describe the above-mentioned deferment and back-off.

In this way, in order to transmit a packet, those of the communication devices 12—1 to 12—N which hold a packet to transmit execute the carrier sense operation and the collision detection operation, thereby controlling the packet transmission. Each of the communication devices 12—1 to 12—N detects the address data included in the data packet which has been transmitted through the data channel 14. In this way, when it is detected that the address data has designated a station, the corresponding communication device will accept the data packet.

On the other hand, in the back-off operation, for example, when a collision between the data packets is detected, the transmission of the data packet is stopped, and the retransmission of this data packet is postponed by a period of time which is determined at random within a predetermined range. In this case, the performance of the control of the CSMA/CD method largely depends upon how the determination of this back-off period of time is made. For instance, in the case where a range in which this random back-off period of time can be set is made too small, data collisions frequently occur, and consequently, the effective activity ratio (throughput) of the data channel 14 will be small. In contrast, when the settable range of the back-off time is made too large, the period of time in which the data channel 14 is not used increases, causing the throughput to be reduced. Therefore, it is very important to appropriately set the range of the back-off time. The three major performance measures of data communication using the CSMA/CD method are: (i) throughput, (ii) network delay time and (iii) stability. The first term "throughput" here denotes the time ratio of effective activity in the data channel. The second term "network delay time" represents the length of time between the packet's arrival to the output buffer of the communication device and the packet's successful transmission from this communication device. Consider the probability that a packet given to a communication device has been successfully transmitted before certain time. The time such that the above probability equals 99% is called the 99 percentile of the packet transmission delay time, and is commonly employed as a measure of performance. The third term "stability" may be evaluated by the probability that the abnormal congestion to be explained below will happen in a given time period. When the load to the network increases and when many communication devices have data packets to be transmitted at a given moment, collision among data in the data channel frequently occurs. Due to this, the probability of success in packet transmission may become very low, in which case an abnormal congestion is said to have occurred. The probability that such abnormal congestion takes place is desired to be minimized.

As an example of the network adopting the CSMA/CD the so-called Ethernet disclosed in U.S. Patent No. 4,063,220 is known. In the Ethernet, the excessive collision error is frequently encountered under heavy load. Namely, when the number of transmission failure exceeds a predetermined number, the effort to transmit the data packet is discontinued, and the data packet is abandoned. Ordinarily, since the data processing unit, which is informed of the excessive collision error, regenerates a similar packet as the data packet abandoned, and sends the regenerated packet to the ˙corresponding communication device, it is hardly useful for relieving the congestion in the data channel 14. Therefore, once an abnormal congestion takes place, there is scarcely any possibility that this state can automatically be dissolved. The theoretical importance of this stability has been realized for some time. But the abnormal congestion phenomenon is not yet observed frequently in the actual networks because so far the networks installed have been operating under relatively light load. As a result, a practical solution to the problem of abnormal congestion has hardly been considered.

In the conventional CSMA/CD method, whenever a transmission trial of a data packet fails, the communication device sets the back-off time at random, within a given range which will be referred to as the back-off range. When this back-off time expires, the station again tries to transmit the packet. The back-off range changes from its initial value as the data packet repeatedly fail to transmit. Due to this, the communication device vainly repeats transmission trials until a suitable back-off time range has been set and transmission eventually succeeds or transmisson never succeeds and excessive collision error is involved. The time wasted by collisions corresponding to the trial failures mentioned above causes throughput to be reduced.

As a solution to this stability problem, there is considered a method based on setting the back-off time according to the back-off range used by the previous successful packet transmission. In other words, the prior back-off time range is passed as the initial value for the next back-off range, for the next packet to be transmitted. However, when the channel load changes quickly, this method does not guarantee a proper back-off time range.

Furthermore, when the network load is heavy, there is a possibility that a particular communication device will have monopolized the data channel 14. That is, when a particular communication device once succeeds in transmitting a packet, this communication device will be the first to know the completion of this packet transmission. The other communication devices detect the completion of the above-mentioned packet transmission only after a certain propagation delay time has elapsed. Hence, assuming that the communication device which has successfully completed packet transmission holds many other packets to transmit, it starts the transmission of the next packet before the other communication devices. Thus, this communication device can monopolize the data channel 14. This phenomenon is known by the name of capture effect.

It is an object of the present invention to provide a packet communication system which enables packet communication to be performed with efficiency.

This object is accomplished by a packet communication system comprising a data channel; and a plurality of communication apparatuses connected to the data channel, wherein each communication apparatus includes the reception control device for receiving data communicated on the data channel by another communication apparatus, and supplying a carrier sense signal indicating the presence of carrier signal on the data channel and a collision detection signal indicating the presence of at least two data on the data channel;

a transmission control device for transmitting a packet onto the data channel in response to a data transmission request signal, and supplying a back-off request signal and interrupting the transmission of packet in response to a collision detection signal generated from the reception control device; and

a back-off control device for selectively determining the back-off time range responding to a collision detection signal or each time no carrier signal is detected on the data channel for a preset period of time, randomly setting a back-off time within the back-off time range and starting to count the back-off time in response to a back-off request signal from the transmission control device, and supplying a data transmission request signal to the transmission control device when the back-off time has expired.

In this invention, the back-off time range is selectively determined in accordance with the utilization of the data channel irrespective of the operation of the individual transmission control device. When collision is detected during data transmission, the transmission control device suspends the transssion and retires the data transmission after an appropriately determined back-off time has elapsed. Therefore, it is possible to perform packet communication with efficiency.

This invention can be more fully understood from the following detailed description when taken in conjunction with the accompanying drawings, in which:

Fig. 1 shows a conventional local area network;

Fig. 2 is a flow chart for illustrating the packet transmission operation of a station in the network shown in Fig. 1;

Fig. 3 shows a relation in this invention between the probability of successful communication and the ratio of the probability that the data channel is idle and the probability that it is in the state of collision;

Fig. 4 shows a relation between the throughput of the network and network delay time in this invention;

Fig. 5 shows the data format of data packet to be transmitted;

Fig. 6 is a block diagram of packet communication system according to one embodiment of this invention;

Fig. 7 is a block diagram of back-off control section used in the packet communication system of Fig. 6;

Fig. 8 is a block diagram of transmission control section used in the packet communication system of Fig. 6;

Fig. 9 is a block diagram of reception control section used in the packet communication system of Fig. 6;

Fig. 10 is a flow chart for illustrating the operation of the transmission control section shown in Fig. 8;

Figs. 11A and 11B are flow charts for illustrating the operation of reception control section shown in Fig. 9;

Figs. 12A and 12B are flow charts for illustrating the operation of back-off control section shown in Fig. 7; and

Fig. 13 shows a back-off control circuit which can be used instead of the back-off control section shown in Fig. 7.

A packet communication system according to one embodiment of the present invention is constituted in a similar manner to that shown in Fig. 1 except for the communication devices 12—1 to 12—N. The embodiment of the present invention will have two levels of data packet priority, viz. high and low priorities. The high priority packets are required to have small network delay of, say, less than 100 milliseconds of 99 percentile delay time, while the low priority packets have no such limitations. The high level packets are assumed to have one kilobits of information, whereas the low priority packets have eight kilobits of information.

In the case where a communication device has a packet to transmit and accesses the data channel 14 and detects the presence of a carrier signal in this data channel, or in the case where data collides immediately after the communication device has started transmitting the packet due to the absence of the carrier signal, the transmission of the above packet is suspended. Control of the packet transmission by the CSMA/CD method is generally regained by accessing the data channel once again by the above communication device and by again transmitting the packet after the back-off time has expired. In this way, when a station or communication device tries to transmit a packet, the back-off operation is executed when the carrier signal is sensed or when the collision is detected.

A method for setting the back-off range according to the present invention will be described hereinbelow.

In the present invention, the state of the data channel is always kept under observation, and the continuation time of the idle state (carrier sense off state) of this data channel is always being detected. The detection of the continuation time of this idle state is similar to the carrier sense operation, since the carrier at a given time is either off (channel idle) or on (channel busy). The carrier sense operation is performed just prior to accessing the data channel to detect whether the data channel is busy or idle. In contrast, detecting the continuation time of the idle state in this invention is carried out to continuously detect the continuation time of the carrier sense off state. The communication device checks to see if the continuation time of the carrier sense off state exceeds a predetermined time, e.g., 800 bit time. The communication device also continuously detects collision on the data channel caused not only by the present station but also by the stations other than the one being considered. In this way, the communication device sets the back-off time range for the back-off control on the basis of the data relating to the collision and continuation time of the carrier sense off state.

When the communication device receives the data packet to be transmitted, it sets the back-off time range to have the initial value $2^N \times T1$ (N: positive integer, T1: unit of back-off time). This back-off time unit is set in consideration of the signal propagation time between the communication devices, and in consideration of the data transmission speed of the data channel, etc. For example, assuming that the network is 1 km diameter with data transmission speed of 32 megabits per second, the back-off unit time might be set to 400 bit time (= 12.5 μsec). N is set into, e.g., 5, and the intial back-off time is determined to be a certain integer multiple value of T1 among the uniformly distributed random numbers in a random of $2^N$, from 0 to $2^N - 1$. In this way, after the communication device receives a data packet to transmit, the device sets the initial back-off time. When this initial back-off time has expired, the device tries to transmit the packet for the first time. The packet transmission trial is performed as follows. If the carrier sense is in on-state, or if the carrier sense is in off-state but a collision between data has been detected after packet transmission has started, the communication device performs the back-off operation. Otherwise, viz. if the carrier sense is in off-state and no collision is detected during packet transmission, the packet transmission trial terminates successfully and no back-off operation is performed. The back-off time is set as a random integer multiple of back-off unit time T1, where the aforementioned random number is chosen among 0, 1, . . . , $2^N - 1$, in which case $2^N$ is said to be the back-off range. The back-off range is continuously being updated as follows. When a station receives a packet to transmit, the back-off range BR is set to an initial value of, say, $2^5$. Then when a collision caused by any stations, not necessarily involving the present station, is detected on the data channel, the back-off range BR is set to have the smaller value being the value $2^{i+1}$ which is twice the previously set back-off range $2^i$ (initially $2^5$)

and the maximum back-off range $2^X$. In addition, when carrier is found to be in off-state continuously for more than a predetermined period of time, say 800 bit time, the back-off range SR is set to have the larger value between $2^{i-1}$ which is one-half the previously set back-off range $2^i$ (initially $2^5$) and the minimum back-off range $2^Y$. Needless to say, the minimum back-off range $2^Y$ is less than or equal to the maximum back-off range $2^X$, both minimum and maximum back-off ranges being positive integers.

The updating of the above back-off range is executed when the collision is detected or when the idle state has continued for more than the predetermined period of time, independently of the access operation to the data channel.

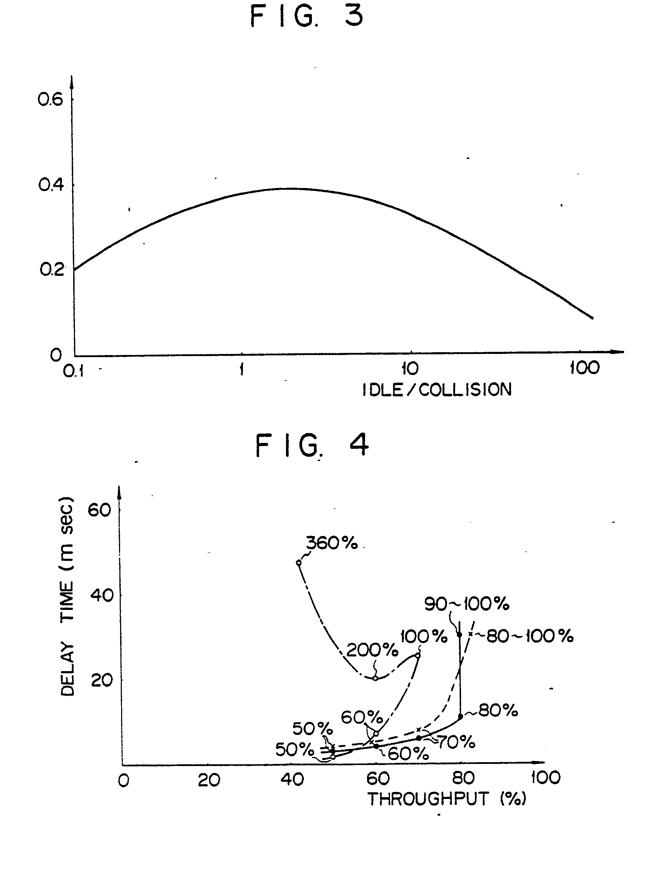

Fig. 3 shows the probability of success for each transmission trial when the trials were made under the back-off control according to the present invention. In addition, in Fig. 3, the horizontal axis denotes the ratio of the probability that the data channel is idle and the probability that it is in the collision state. This successful communication probability is hardly influenced by the number of communication devices which constitute the network. As is obvious from this characteristic diagram, when the ratio of the probability of idle state and the probability of collision state is approximately 1.3, the successful communication probability is at the maximum value of about 0.38.

Fig. 4 shows a characteristic diagram for a two-level priority system according to this invention, of the relationship between the channel throughput under the back-off control according to the present invention, and the 99 percentile network delay of high priority packets. The numeric value (% indication) shown in Fig. 4 represents the rate of the load to the data channel, i.e., the ratio of the generation (Megabits/sec) of the effective portion in the data packet against the channel capacity or transmission speed (Megabits/sec) of the data channel. In Fig. 4, the solid line shows the characteristic A in the case where the number of communication devices connected to the data channel is 10, where the number of high priority data packets, whose packet size is 1 kilobits, is 20% among all generated packets, and that of low priority data packets, whose packet size is 8 kilobits, is 80%. The broken line shows the characteristic B in the case where the number of communication devices is set to 100. The characteristic C indicated by the alternate long and short dash line shows the characteristic in the case where the number of communication devices is 100, where the number of high priority data packets whose size is 1 kilobits is 50%, and that of low priority data packets whose size is 8 kilobits is 50%, were transmitted. This case C is an example of heavy traffic behavior characteristics. As shown by these characteristics A, B and C, high throughput is attained with short network delay time without being unduly influenced by change in trafic load.

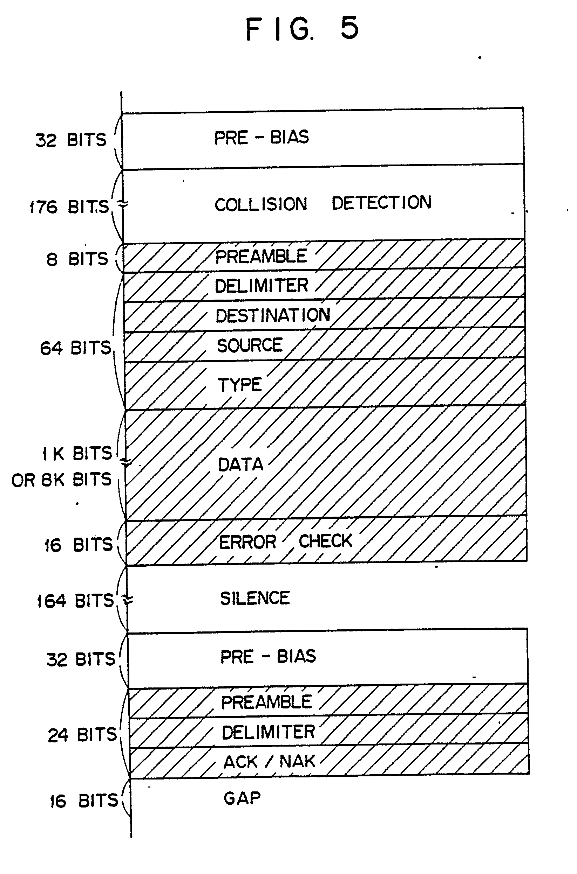

Fig. 5 shows the data format of a packet to be transmitted from a communication device on the transmission side, and a response packet to be generated from a communication device on the reception side. This packet includes either 1 kilobits of high priority data or 8 kilobits of low priority data, and the preamble, delimiter, destination address, source address, etc. which are necessary to suitably transmit this data section to a desired communication device.

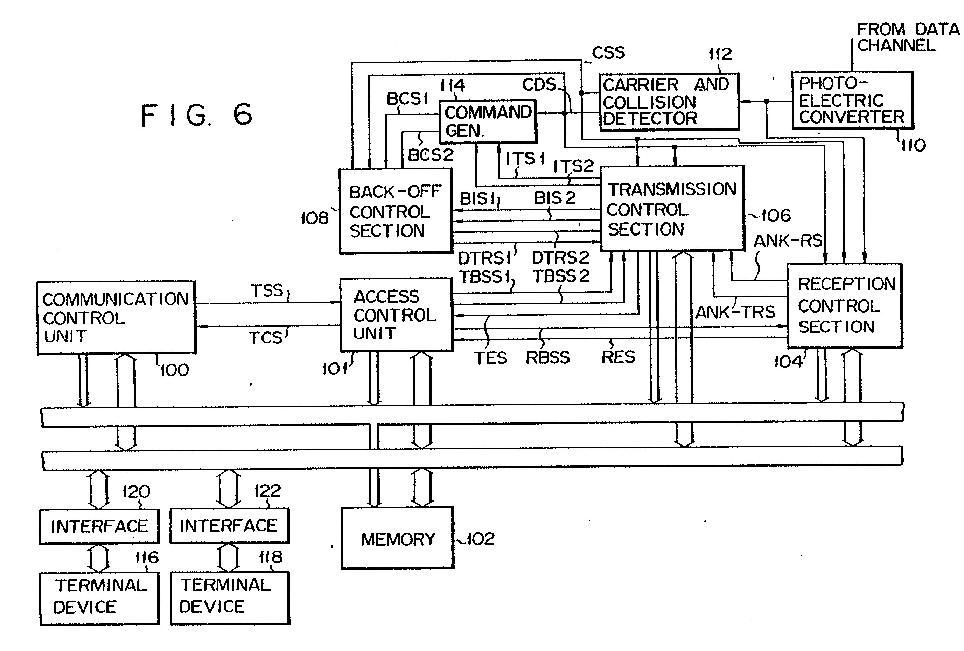

Fig. 6 is a block diagram showing one communication device which is used in the packet communication system according to one embodiment of the present invention. This communication device includes: a communication control unit 100; an access control unit 101; a packet buffer memory 102 coupled to these control units 100 and 101 through a data bus; a reception control section 104 and a transmission control section 106 which are coupled to the access control unit 101 through the data bus; and a back-off control section 108 coupled to this transmission control section 106. Furthermore, this communication device includes: a photo-electric converter 110 for converting an optical signal from the data channel into an electric signal; a carrier and collision detector 112 for performing the carrier sense and collision detection in response to an output signal from this converter 110; and a command generator 114 for generating a back-off command signal to the back-off control section 108 in response to a collision detection signal from the detector 112 and to a signal from the transmission control section 106 representing that the data of the present station is being transmitted. In addition, terminal devices 116 and 118 are coupled to the communication control unit 100 through interfaces 120 and 122. In this embodiment, these terminal devices 116 and 118 serve to generate the high priority packet of 1 kilobits and the low priority packet of 8 kilobits, respectively.

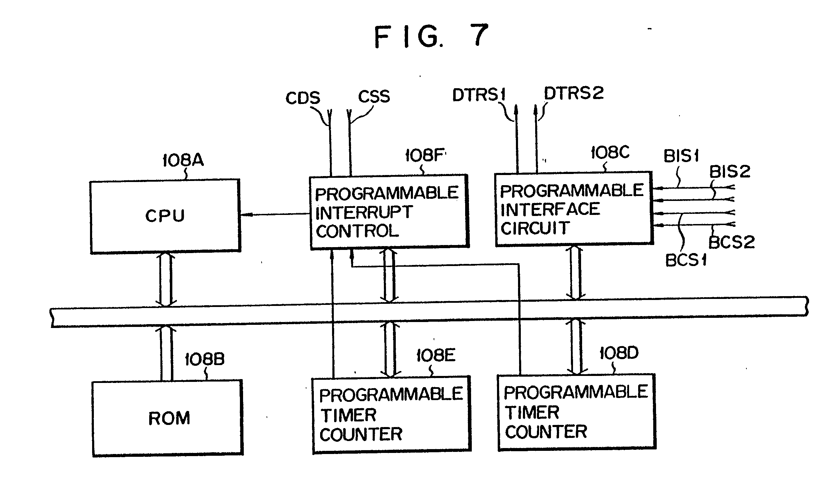

Fig. 7 is a block diagram showing the back-off control section 108 shown in Fig. 6. This back-off control section 108 includes: a central processing unit (CPU) 108A; a read only memory (ROM) 108B in which the operation program of this CPU 108A is stored; a programmable interface circuit 108C coupled to the CPU 108A through a data bus; programmable timer counters 108D and 108E; and a programmable interrupt control 108F. The CPU 108A executes the back-off operations independently for the high and low priority packets, respectively, and it generates a transmission request signal to the transmission control section 106 to allow the high or low priority packet to be transmitted after the time that was set in the timer counter 108D or 108E has expired. Also, the CPU 108A sets the time data in the timer counters 108D and 108E according to the information about the collision in the data channel and about the continuation time of the carrier sense off state as mentioned previously.

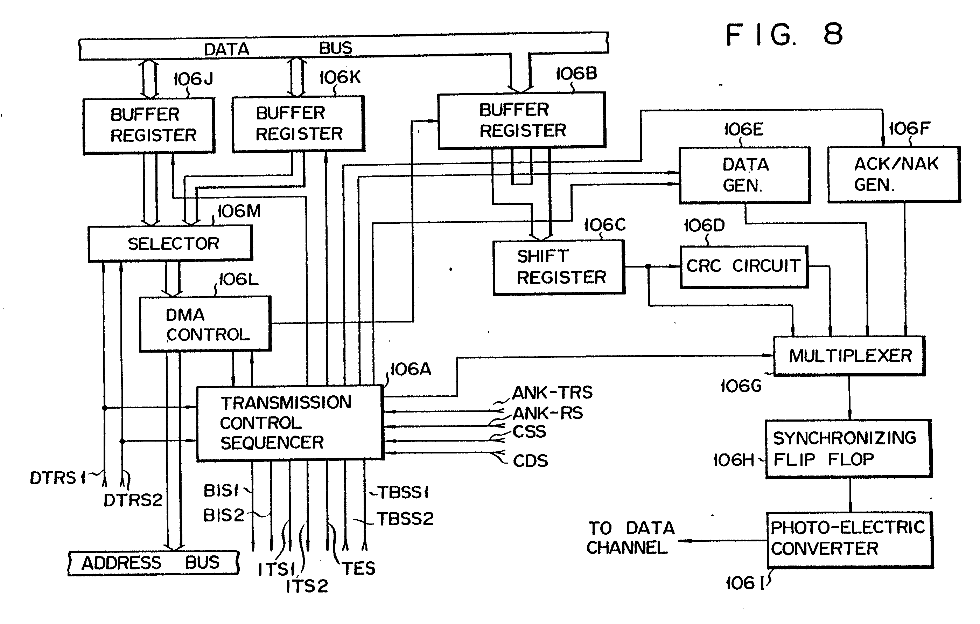

Fig. 8 is a block digram of the transmission control section 106 shown in Fig. 6. This transmission control section 106 includes: a transmission control sequencer 106A; a 16-bit buffer register 106B for storing data from the memory 102; a shift register 106C which individually receives the higher significant 8 bits and the lower significant 8 bits from this buffer register 106B and serially outputs those bits one by one; a CRC circuit 106D for generating cyclic redundancy check (CRC) code for the data from this shift register 106C; a data generator 106E for generating the collision detection (CD) zone, preamble, delimiter, destination, source and type data ; and an acknowledgement and negative acknowledgement (ACK/NAK) generator 106F for generating ACK/NAK data. After the data from the data generator 106E, shift register 106C and CRC circuit 106D is selected by a multiplexer 106G, it is supplied as the packet of the format shown in Fig. 5 to a photo-electric converter 106I through a synchronizing flip-flop 106H. Furthermore, this transmission control section 106 includes: buffer registers 106J and 106K in which transmission command data from the communication control section 100 representing the address location and size of the packet to be read out are written; and a direct memory access (DMA) control 106L which receives data from these buffer registers 106J and 106K through a data selector 106M and which reads out the data of the designated size from the designated address location in the memory 102 on the basis of this received data.

This transmission control section 106 transmits the packet only when the data channel is in the idle state in response to a transmission request signal DTRS1 or DTRS2 from the back-off control section 108. In this case, once a CD signal CDS has been generated from the carrier and collision detector 112, this packet transmission is suspended.

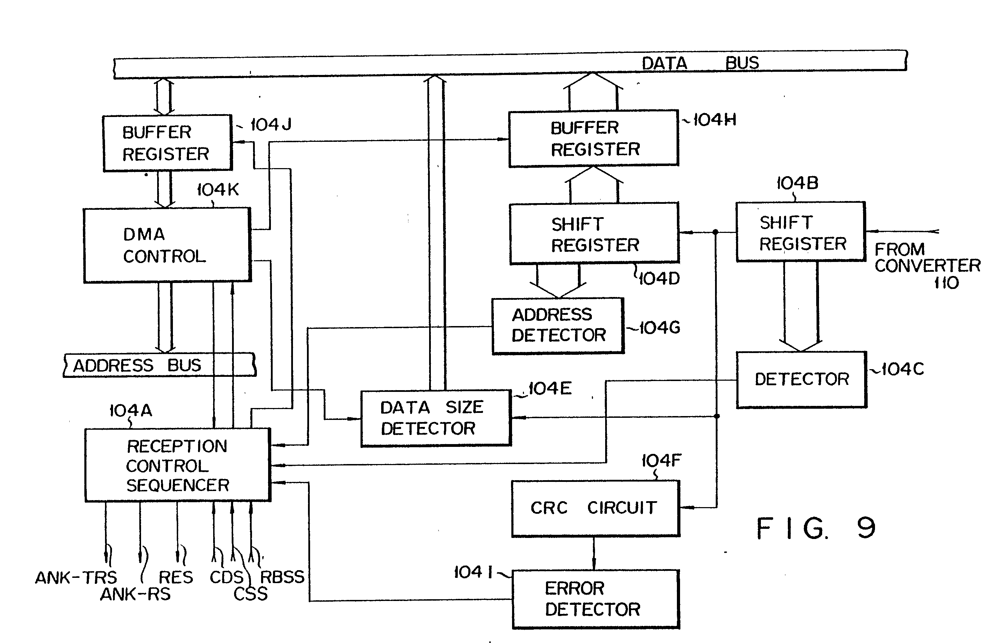

Fig. 9 is a block diagram of the reception control section 104 shown in Fig. 6. This reception control section 104 includes: a reception control sequencer 104A; an 8-bit shift register 104B for sequentially shifting an output signal from the photo-electric converter 110 (Fig. 6) to convert the optical signal received through the data channel into the electric signal; a detector 104C for detecting if the start delimiter or ACK/NAK data has been included in the received data based on the content of the shift register 104B; a 16-bit shift register 104D which sequentially receives the bit data from the shift register 104B; a data size detector 104E; and a CRC circuit 104F. An address detector 104G detects if the received data is the data destined for corresponding station on the basis of the content of the shift register 104D. When it has been detected that this received data is the data destined for the present station, this address detector 104G gives a transfer command to the reception control sequencer 104A. Due to this, the reception control sequencer 104A transfers the contents of the shift register 104D to the memory 102 through a 16-bit buffer register 104H. In addition, an error detector 104I checks whether or not a code error is included in the received data on the basis of the CRC code from the CRC circuit 104F. This reception control section 104 further includes: a buffer register 104J in which the reception command data from the adapter control section 100 indicating the write address location and data size are written; and a DMA control 104K for allowing the contents of the buffer register 104H to be written in the designated address location in the memory 102 in accordance with the contents of this buffer register 104J.

This reception control section 104 detects the presence or absence of the carrier signal on this data channel. The occurrence of data collision is detected on the basis of the output signal from the photo-electric converter 110 which converts the optical signal input through the data channel into an electric signal. On the other hand, if the destination address of the received packet designates the present station, the reception control section 104 immediately generates an ACK/NAK transmission request signal ANK-TRS to the transmission control section 106 upon completion of the reception of this data packet.

The communication control unit 100 shown in Fig. 6 stores data from the terminal devices 116 and 118 into the high and low priority memory areas in the memory 102, respectively.

In the transmission operating mode, the communication control unit 100 supplies a transmission start signal TSS to the access control unit 101. At the same time it writes the readout address data and the size data of the packet to be transmitted into a predetermined memory area in the memory 102. This access control unit 101 reads out the readout address data and size data from the memory 102 in response to the transmission start signal TSS and supplies it to the transmission control section 106. At the same time it supplies a transmission buffer specifying signal TBSS1 or TBSS2 to this transmission control section 106 in accordance with the priority of the packets to be transmitted. For notational convenience, hereinafter the suffixes 1 and 2 as in TBSS1 and TBSS2 will denote high and low priority, respectively. The transmission control sequencer 106A in this transmission control section 106 accepts the data representing the address location and size of the high or low priority packet which is to be transmitted in the buffer register 106J or 106K, respectively, in response to the transmission buffer specifying signal TBSS1 or TBSS2 from the access control unit 101. At this time, this control sequencer 106A supplies a back-off initialization signal BIS1 or BIS2 to the back-off control section 108 in response to the transmission buffer specifying signal TBSS1 or TBSS2. This back-off control section 108 sets the initial back-off time IBT1 or IBT2 in the timer counter 108D or 108E as will be described later in response to the back-off initialization signal BIS1 or BIS2. When the initial back-off time IBT1 or IBT2 has expired, as when it is detected that a carrier sense signal CSS from the carrier and collision detector 112 is at a low level, i.e., when it indicates the carrier sense is off, this back-off control section 108 generates the corresponding data transmission request signal DTRS1 or DTRS2. In response to this data transmission request signal DTRS1 or DTRS2, when it is detected that the output signal CDS from the carrier and collision detector 112 is at a low level at this time, the transmission control section 106 transmits the designated packet. An ACK/NAK signal is generated from another communication device which receives the packet from this transmission control section 106. When the reception control section 104 receives this ACK/NAK signal, it generates an ACK/NAK reception signal ANK—RS. The transmission control section 106 supplies a transmission end signal TES to the access control unit 101 in response to this ACK/NAK reception signal ANK—RS. This access control unit 101 supplies a transmission completion signal TCS to the communication control unit 100, thereby completing data transmission.

The back-off control section 108 executes the back-off time counting operation whenever the back-off time has expired or whenever a back-off command signal BCS1 or BCS2 is generated from the back-off command generator 114. The back-off control section can change the back-off range in response to the collision detection signal from the detector 112 or whenever it is detected that the time that the carrier sense is off has continued for more than the predetermined period of time.

In the reception operating mode, the reception control section 104 receives the packet destined for its station in response to an input signal from the photo-electric converter 110. In this way, this reception control section 104 receives the packet from another communication device and stores it in the address location in the memory 102 designated by the address data which was stored in the buffer register 104J by the access control unit 101. Furthermore, the reception control section 104 generates an ACK/NAK transmission request signal ANK—TRS upon completion of the appropriate reception of the packet. The transmission control section 106 generates an ACK/NAK signal in response to this ACK/NAK transmission request signal ANK—TRS.

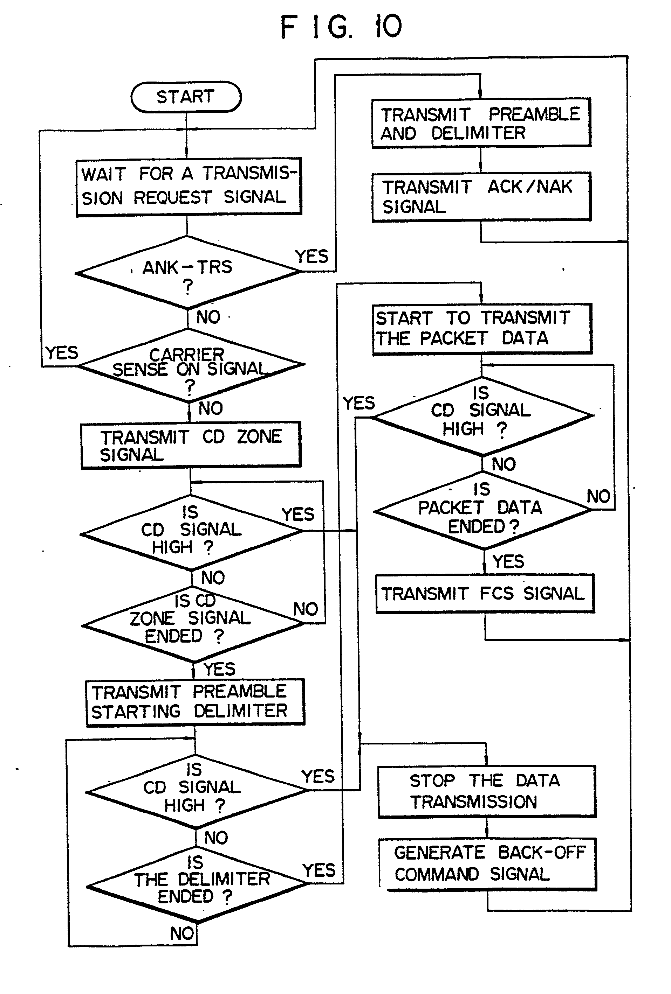

Fig. 10 is a flow chart showing the operation of the transmission control section 106 and the command generator 114. When the transmission control sequencer 106A receives the data transmission request signal DTRS1 or DTRS2 from the back-off control section 108 or when it receives the transmission request signal ANK—TRS from the reception control section 104, it checks to see if the ACK/NAK transmission request signal ANK—TRS is generated from the reception control section 104 and if the carrier sense on signal has been generated from the carrier and collision detector 112. In the case where it is detected that the ACK/NAK transmission request signal ANK—TRS has been generated, the control sequencer 106A activates the data generator 106E and ACK/NAK generator 106F to allow the preamble, delimiter and ACK/NAK data to be supplied to the photoelectric converter 106I through the multiplexer 106G and flip-flop 106H. In addition, in the case where it is detected that the carrier sense on signal is generated after the data transmission request signal DTRS1 or DTRS2 has been received, the control sequencer 106A waits until the next data transmission request signal DTRS1 or DTRS2 is generated from the back-off control section 108 or until the ACK/NAK transmission request signal ANK—TRS is generated from the reception control section 104. In addition, if this happens, the back-off control section 108 will start the next back-off operation without changing the back-off time range.

In the case where it is detected that neither the ACK/NAK transmission request signal ANK—TRS nor the carrier sense on signal is generated, the transmission control sequencer 106A will start transmitting the packet. At the same time, it will supply an in-transmission signal ITS1 or ITS2 to the command generator 114 in accordance with the priority of the packet to be transmitted. This packet transmission is started by supplying a first activation signal to the data generator 106E to allow a collision detection (CD) zone signal to be generated for a predetermined time after prebiasing a laser element which is used as the photoelectric converter 106I. While this CD zone signal is being generated, unless a high level collision detection signal CDS is generated from the carrier and collision detector 112, the transmission control sequencer 106A will generate a second activation signal to activate the data generator 106E, and to supply the preamble, delimiter, destination address, etc. to the photo-electric converter 106H through the multiplexer 106G and flip-flop 106H. Thereafter, the transmission control section 106A will read out the packet data from the memory 102 in accordance with the content of the buffer register 106J or 106K, and will sequentially transfer it to the buffer register 106B. This packet data is supplied to the CRC circuit 106D through the shift register 106C, and also to the photo-electric converter 106I. In this way, the transmission control sequencer 106A permits the CRC circuit 106D to generate a CRC code as a frame-check sequence after the transmission of the data of one packet has been completed. Furthermore, thereafter, the transmission control sequencer allows the data generator 106E to generate a completion delimiter, thereby completing packet transmission. After that, when the ACK/NAK reception signal ANK—RS which indicates that the ACK or NAK signal has been received from another communication device is supplied from the reception control section 104, the transmission control sequencer 106A supplies the transmission end signal TES to the access control unit 101, thereby finishing this packet transmitting operation.

As described above, although the transmission control sequencer 106A starts the data transmitting operation in response to, e.g., the data transmission request signal DTRS1, even if it receives another data transmission request signal, e.g., signal DTRS2, before completing the routine of one cycle of this data transmitting operation, the sequencer 106A will ignore this second signal DTRS2 and will continue to transmit the present data.

When the high level collision detection signal CDS is generated while the CD zone signal is being generated, or while the preamble, start delimiter, etc. are being generated, or while the packet data is being transmitted, the transmission control sequencer 106A will stop data transmission. Also in this case, the command generator 114 will supply a back-off command signal BCS1 or BCS2 to the back-off control section 108 in response to the in-transmission signal ITS1 or ITS2 from the transmission control sequencer 106A.

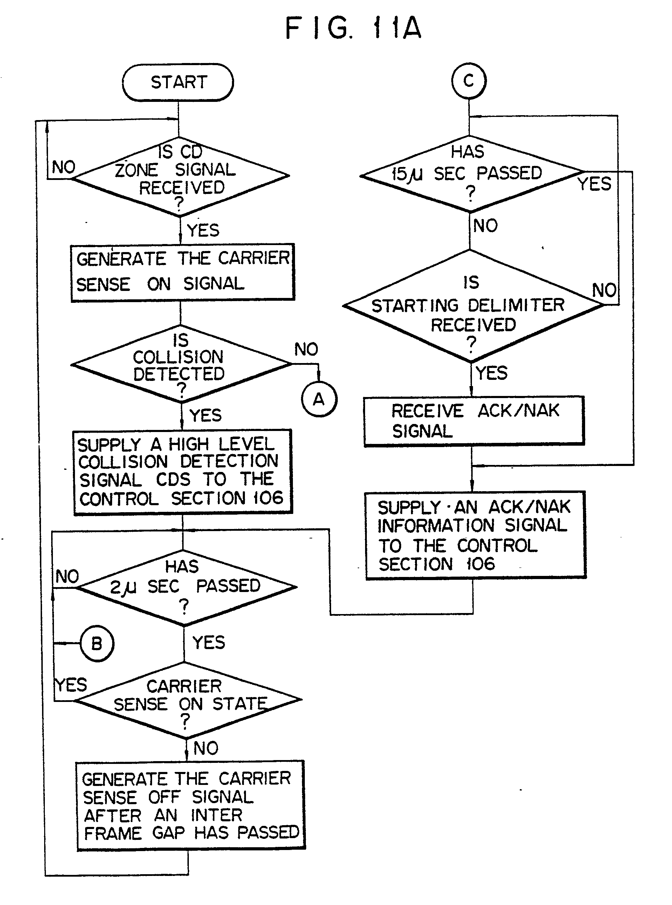

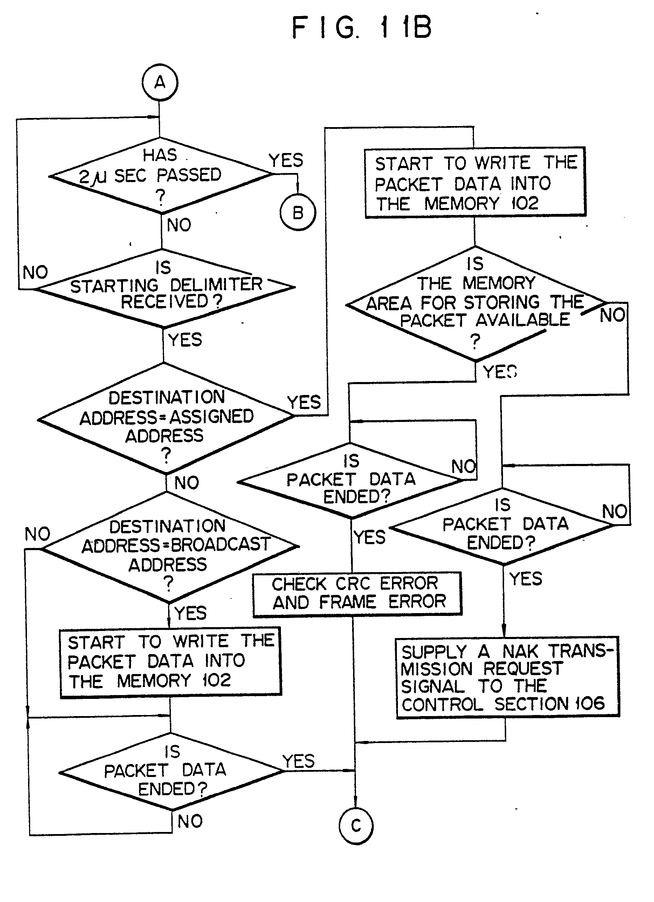

Figs. 11A and 11B are flow charts showing the operation of the reception control section 104, and the carrier and collision detector 112. When the carrier sand collision detector 112 detects that the CD zone signal from another communication device has been received in response to an output signal from the photo-electric converter 110, it generates the high level carrier sense signal CSS. In addition, if at this time any data has collided, the collision detection signal CDS is supplied to the reception control sequencer 104A to stop the reception of the packet data. The carrier sense signal CSS from this detector 112 is held at a high level for an interframe gap period, for example, until a 16-bit time passes after the absence of carrier on the data channel (carrier off) was detected.

On the other hand, if no data has collided, the start delimiter is checked to see if it has received the data during the predetermined time, e.g., 2μsecs after the CD zone signal has been detected. When the delimiter is received by the shift register 104B, the detector 104C supplies a delimiter detection signal to the reception control sequencer 104A. After the reception of the reception of the delimiter has been confirmed in this way, the address detector 104G checks to see if the received destination address coincides with the assigned address or if it coincides with the broadcast address on the basis of the contents of the shift register 104D. Either way, the received packet is written in the address location in the memory 102 which has been determined by the address data preliminarily stored in the buffer register 104J. This writing operation is executed by supplying the data in the buffer register 104H to this memory 102 while updating the write address location in the memory 102 under the control of the DMA control 104K. A CRC error signal and a frame size error signal from the error detector 104I, and data size detector 104E are checked upon completion of the reception of the packet. When it has been detected that these error signals are at a low level, i.e., that the CRC error and frame size error do not occur, the reception control sequencer 104A supplies a reception end signal RES to the access control unit 101, and also supplies an ACK transmission request signal to the transmission control section 106.

In addition, even in the case where the packet was appropriately received, if the memory area to store the received packet is not prepared in the memory 102, the control sequencer 104A will supply an NAK transmission request signal to the transmission control section 106. On the other hand, if the destination address is not that of the present communication device or if an error has been detected, the control sequencer 104A will not generate an ACK or NAK transmission request signal. Thereafter, the control sequencer 104A will wait for a predetermined period of time, e.g., over 15 μsec until the ACK/NAK signal is received independently of the destination address and the originating address. Then the control sequencer 104A will supply an ACK/NAK information signal representing the ACK reception, NAK reception, or time-up to the transmission control section 106.

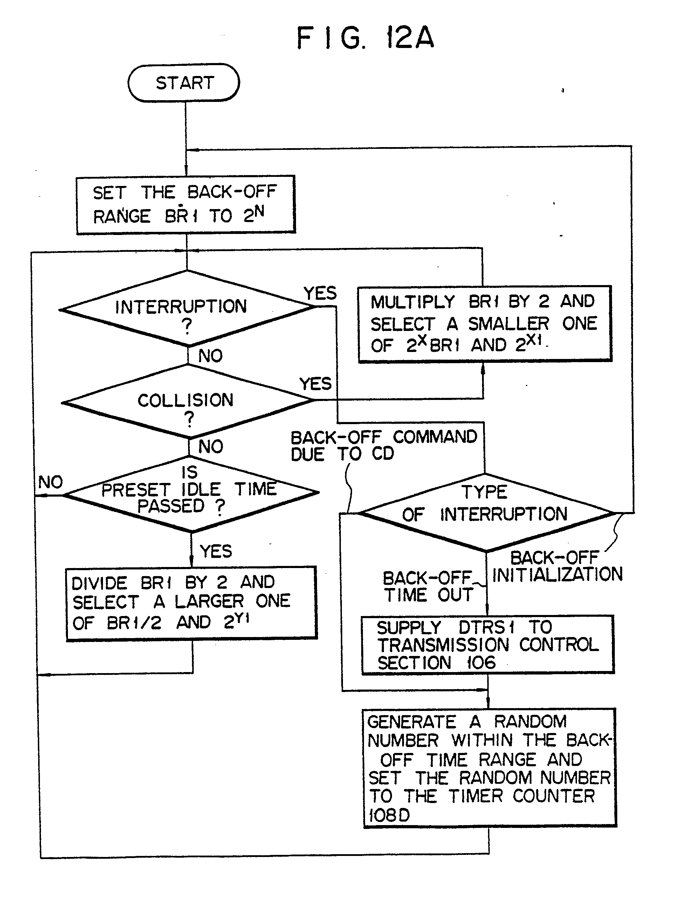

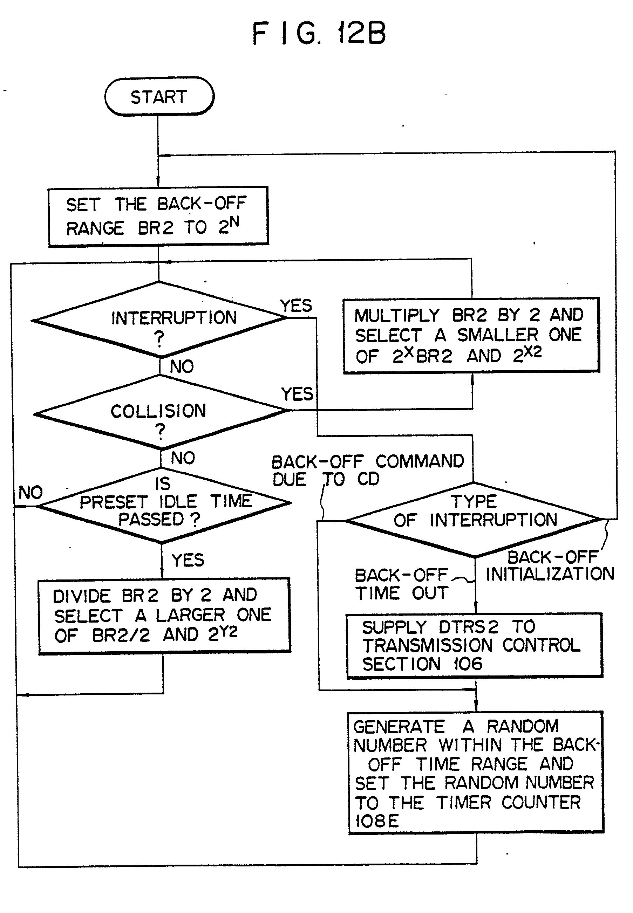

Figs. 12A and 12B are flow charts showing the operation of the back-off control section 108. A back-off range BR1 or BR2 is set to have an initial value $2^N$ in accordance with the data to be transmitted despite its high or low priority. The back-off control operations for the high and low priority data are substantially similar, therefore, the back-off control operation for the high priority data will be described hereinbelow with reference to Fig. 12A.

After the back-off range BR1 has been set to have an initial value $2^N$, checks are sequentially performed with respect to the occurrence of the interruption, the occurrence of any collisions, or the occurrence of idle state. When an interruption has been detected, the cause of this interruption is checked. In the case where an interruption signal is generated due to the completion of the time counting operation by the timer counter 108D, the data transmission request signal DTRS1 is supplied to the transmission control section 106. Thereafter, a random number within the back-off time range which is set at present is generated. This random number is set in the timer counter 108E, thereby allowing the time counting operation to be executed. In addition, when an interruption occurs because the back-off command signal BCS1 was generated from the back-off command generator 114, the time data is set in the timer counter 108E without generating the transmission request signal DTRS1. Furthermore, in the case where an interruption occurs due to the back-off initialization signal BIS1 generated from the transmission control sequencer 106A, the back-off range initialization step is again executed.

If no interruption occurs and if data collision is detected, the back-off range BR1 is multiplied by two, and the smaller value of $2 \times BR1$ and $2^{X1}$ (where $2^{X1}$ denotes the maximum back-off range for the high priority data) is set to be the next back-off range. Thereafter, the occurrence of an interruption is again checked.

If no interruption has occurred and no data collision has been detected, and if it has been detected that the idle state has continued for at least a predetermined period of time, the back-off range BR1 is divided by 2, and the larger value of

BR1/2 and $2^{Y1}$ (where $2^{Y1}$ denotes the minimum back-off range for the high priority data) is selected as the next back-off range.

The back-off control for low priority data is executed in substantially the same manner as that for the high priority data, excluding the fact that the maximum back-off range $2^{X2}$ is set larger than $2^{X1}$.

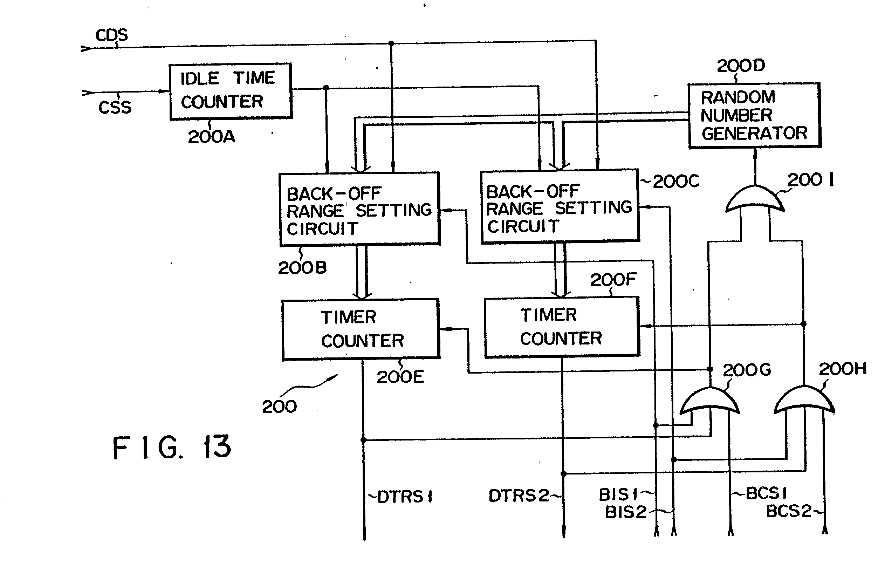

Fig. 13 shows a back-off control circuit 200 which has a similar function as the back-off control section 108 shown in Fig. 7, and which can be used in place of this control section 108. This back-off control circuit 200 includes an idle time counter 200A for generating an output signal when it detects that the carrier sense off state has continued for a predetermined period of time in response to the carrier sense signal from the carrier and collision detector 112; and back-off range setting circuits 200B and 200C each of which receives an output signal from the idle time counter 200A and a collision detection signal CDS from the carrier and collision detector 112. Whenever each of these back-off range setting circuits 200B and 200C receives an output signal from the idle time counter 200A, they determine, the back-off range BR to have the larger value of the minimum back-off range 2Y and the back-off range $2^{i-1}$ which is obtained by multiplying the preceding back-off range $2^i$ by $\frac{1}{2}$. In addition, whenever each of the circuits 200B and 200C receives the collision detection signal CDS from the carrier and collision detector 112, they determine the back-off range BR to have the smaller value of the maximum back-off range $2^X$ and the back-off range $2^{i+1}$ which is obtained by multiplying the preceding back-off range $2^i$ by 2. These circuits 200B and 200C respectively set the initial back-off range to be $2^N$ in response to the back-off initialization signals BIS1 and BIS2 from the transmission control section 106. Furthermore, these circuits 200B and 200C receive random number data from a random number generator 200D and supply the random number data within the set back-off range to timer counters 200E and 200F. When these timer counters 200E and 200F finish to count down the time corresponding to the set random number data, they generate data transmission request signals DTRS1 and DTRS2 to the transmission control section 106, respectively.

The signals BIS1, BCS1 and DTRS1 are supplied through an OR gate 200G to the timer counter 200E, thereby setting the random number data supplied through the back-off range setting circuit 200B in this timer counter 200E. On the other hand, the signals BIS2, BCS2 and DTRS2 are supplied through an OR gate 200H to the timer counter 200F, thereby setting the random data supplied through the back-off range setting circuit 200C in this timer counter 200F. In addition, output signals of these OR gates 200G and 200H are supplied through an OR gate 200I to the random number generator 200D, thereby allowing the random number data to be generated from this random number generator 200D.

In the above-mentioned back-off control circuit 200, the back-off range setting circuits 200B and 200C set the back-off ranges on the basis of the information with respect to the data collision and to the continuation time of the carrier sense off state. In addition, the timer counters 200E and 200F generate output signals DTRS1 and DTRS2 upon completion of the counting operations. These output signals DTRS1 and DTRS2 are supplied to the timer counters 200E and 200F through the OR gates 200G and 200H, respectively, thereby again setting the random number data in the timer counters 200E and 200F. In this way, the timer counters 200E and 200F repeatedly execute the counting operations.

Although the present invention has been described in the above with respect to one embodiment, the present invention is not limited to only this embodiment. For example, although the terminal devices 116 and 118 for generating data with different priorities have been used in the communication system shown in Fig. 6, the terminal device 116 or 118 may be omitted when handling data having the same priority. For instance, when omitting the terminal device 118, it is possible to omit the buffer register 106K and selector 106M thereby allowing the output data of the buffer register 106J to be supplied to the DMA control 106L. At the same time, it is possible to omit the signals, TBSS2, BIS2, BCS2, ITS2, and DTRS2.

In addition, both back-off control sections 108 and 200 shown in Figs. 7 and 13 transmit the data transmission request signals DTRS1 or DTRS2 when the back-off time has expired. However, in the case where the carrier sense on signal has been detected after the back-off time has expired, it is possible to inhibit the generation of the data transmission signal from these back-off control sections 108 and 200 instead of inhibiting transmission by a mechanism in the transmission control section 106 in Fig. 6. For instance, in the back-off control section shown in Fig. 13, it is possible to use a switching circuit controlled by the carrier sense signal CSS to inhibit the generation of the data transmission request signal DTRS1 or DTRS2 in the case where the carrier sense signal has a high level, instead of inhibiting transmission initiation within the transmission control section 106.

**Claims**

1. A packet communication system comprising a data channel and a plurality of communication apparatuses connected to said data channel: each communication apparatus including memory means (102), reception control means (104, 110, 112) for receiving data communicated on said data channel by another communication apparatus, to write the received data into said memory means (102), for supplying a carrier sense signal indicating the presence of carrier signal on said data channel and a collision detection signal indicating the presence of at least two data on said data channel, transmission control means (106, 114) for reading out a packet from said memory means (102) to transmit the packet onto said data channel in response to a data transmission request signal, and for supplying a back-off command signal and interrupting the transmission of packet in response to a collision detection signal generated from said reception control means (104, 110, 112), and back-off control means (108; 200) for setting a back-off time in response to a back-off command signal from said transmission control means (106, 114) and for supplying a data transmission request signal to said transmission control means (106, 114) when the thus set back-off time has expired, characterized in that said back-off control means (108; 200) selectively determines the back-off time range in response to a collision detection signal or when no carrier signal is detected on said data channel for a preset period of time, and starts to count a back-off time randomly selected within the back-off time range in response to a back-off request signal from said transmission control means (106, 114).

2. A packet communication system according to Claim 1, characterized in that said reception control means includes a photo-electric converter (110) for converting a light signal received through said data channel, a carrier and collision detector (112) for generating a carrier sense signal and a collision detection signal in accordance with an output signal from said photo-electric converter (110), and a reception control section (104) connected to receive an output signal from said photo-electric converter (110).

3. A packet communication system according to Claim 1 or 2, characterized in that said transmission control means includes a transmission control section (104) for transmitting a packet onto said data channel and a command generator (114) for generating a back-off command signal in response to a collision detection signal generated from said carrier and collision detector (112) while said transmission control section (104) is transmitting a packet onto said data channel.

4. A packet communication system according to Claim 1, 2 or 3, characterized in that said back-off control means (108) includes a control section (108A, 108B, 108F) which increases the back-off time range in response to a collision detection signal and decreases the back-off rime range each time no carrier signal is detected on said data channel for a preset period of time, and a timer circuit (108C, 108D, 108E) to which a back-off time within the back-off time range is set and which generates a data transmission request signal when the set back-off time has expired.

5. A packet communication system according to Claim 1, 2 or 3, characterized in that said back-off control means (200) includes an idle time detector (200A) for producing an output signal when no carrier signal is detected on said data channel for a preset period of time, back-off range setting circuit (200B, 200C) for increasing the back-off time range in response to a collision detection signal and for decreasing the back-off time range in response to an output signal from said idle time detector (200A), and a timer circuit (200E, 200F) to which a back-off time within the back-off time range has been set and which generates a data transmission request signal when the set back-off time has expired.

6. A packet communication system according to Claim 1, 2 or 3, characterized in that said memory means (102) has high and low priority memory areas in which high and low priority data are stored, and said transmission control means (106, 114) makes invalid a data transmission request signal for transmitting data transmission request signal for transmitting data in one of said high and low priority memory areas while said transmission control means (106, 114) is transmitting data in the other of said high and low priority memory areas.

7. A packet communication system according to Claim 6, characterized in that said back-off time range has an upper limit for low priority data transmission which is equal to or greater than that for high priority data transmission.

8. A packet communication system according to Claim 1, characterized in that said transmission control means includes a control section which supplies a back-off initialization signal in response to a reception of data to transmit (from a connected data processing unit), and said back-off control means includes a control section which starts to count a back-off time randomly selected within the back-off time range in response to a back-off initialization signal.

**Patentansprüche**

1. Datenpaket-Vermittlungssystem mit einem Datenkanal und einer Anzahl von mit dem Datenkanal verbundenen Vermittlungs- oder Übertragungsvorrichtungen mit jeweils einer Speichereinheit (102), einer Empfangssteuereinrichtung (104, 110, 112) zum Empfangen der durch eine andere Übertragungsvorrichtung auf dem Datenkanal übertragenen Daten zwecks Einschreibens der empfangenen Daten in die Speichereinheit (102), zum Liefern eines das Vorhandensein des Trägersignals auf dem Datenkanal angebenden Trägertastsignals und eines das Vorhandensein mindestens zweier Daten auf dem Datenkanal angebenden Kolisionserfassungssignals, einer Übermittlungssteuereinrichtung (106, 114) zum Auslesen eines Datenpakets aus der Speichereinheit (102) zwecks Übermittlung des Datenpakets auf dem Datenkanal in Abhängigkeit von einem Datenübermittlungs-Anforderungssignal und zwecks Lieferung eines Aufschub-Befehlssignals (back-off command signal) und Unterbrechung der Übermittlung eines Datenpakets in Abhängigkeit von einem durch die Empfangssteuereinrichtung (104, 110, 112) erzeugten Kollisionserfassungssignal, sowie einer Aufschub-Steuereinrichtung (108; 200) zum Setzen oder Vorgeben einer Aufschubzeit in Abhängigkeit von einem Aufschub-Befehlssignal von der Übermittlungssteuereinrichtung (106, 114) sowie zum Liefern eines Datenübermittlungs-Anforderungssignals zur Übermittlungssteuereinrichtung (106, 114), wenn die so gesetzte oder vorgegebene Aufschubzeit verstrichen ist, dadurch gekennzeichnet, daß die Aufschub-Steuereinrichtung (108; 200) den Aufschubzeitbereich selektiv in Abhängigkeit von einem Kolisionserfassungssignal, oder wenn während einer vorgegebenen Zeitspanne kein Trägersignal auf dem Datenkanal erfaßt wird, bestimmt und das Zählen einer Aufschubzeit, die willkürlich . innerhalb des Aufschubzeitbereichs gewählt ist, in Abhängigkeit vom Aufschubanforderungssignal von der Übermittlungssteuereinrichtung (106, 114) beginnt.

2. . Datenpaket-Vermittlungssystem nach Anspruch 1, dadurch gekennzeichnet, daß die Empfangssteuereinrichtung einen photoelektrischen Wandler (110) zum Umwandeln eines über den Datenkanal empfangenen Lichtsignals, einen Träger- und Kollisionsdetektor (112) zum Erzeugen eines Trägertastsignals und eines Kollisionserfassungssignals nach Maßgabe eines Ausgangssignals vom photoelektrischen Wandler (110) sowie einen zum Empfangen eines Ausgangssignals vom photoelektrischen Wandler (110) geschalteten Empfangssteuerteil (104) aufweist.

3. Datenpaket-Vermittlungssystem nach Anspruch 1 oder 2, dadurch gekennzeichnet, daß die Übermittlungssteuereinrichtung einen Übermittlungssteuerteil (104) zum Übermitteln eines Datenpakets auf dem Datenkanal und einen Befehlsgenerator (114) zum Erzeugen eines Aufschub-Befehlssignals in Abhängigkeit von einem durch den Träger- und Kollisionsdetektor (112) erzeugten Kollisionserfassungssignal, während der Übermittlungssteuerteil (104) ein Datenpaket auf dem Datenkanal übermittelt, aufweist.

4. Datenpaket-Vermittlungssystem nach Anspruch 1, 2 oder 3, dadurch gekennzeichnet, daß die Aufschub-Steuereinrichtung (108) einen Steuerteil (108A, 108B, 108F), der den Aufschubzeitbereich in Abhängigkeit von einem Kollisionserfassungssignal vergrößert und den Aufschubzeitbereich jedesmal dann verkleinert, wenn für eine vorgegebene Zeitspanne kein Trägersignal auf dem Datenkanal erfaßt oder festgestellt wird, und einen Zeitgeberkreis (108C, 108D, 108E), in welchem eine Aufschubzeit innerhalb des Aufschubzeitbereichs gesetzt wird und der bei verstrichener Aufschubzeit ein Datenübermittlungs-Anforderungssignal erzeugt, aufweist.

5. Datenpaket-Vermittlungssystem nach Anspruch 1, 2 oder 3, dadurch gekennzeichnet, daß die Aufschub-Steuereinrichtung (200) einen Leer(lauf)zeitdetektor (200A) zum Erzeugen eines Ausgangssignals, wenn für eine vorgegebene Zeitspanne kein Trägersignal auf dem Datenkanal festgestellt wird, einen Aufschubbereich-Stellkreis (200B, 200C) zum Vergrößern des Aufschubzeitbereichs in Abhängigkeit von einem Kolisionserfassungssignal und zum Verkleinern des Aufschubzeitbereichs in Abhängigkeit von einem Ausgangssignal vom Leerzeitdetektor (200A) und einen Zeitgeberkreis (200E, 200F) aufweist, in welchem eine Aufschubzeit innerhalb des Aufschubzeitbereichs gesetzt (worden) ist und der ein Datenübermittlungs-Anforderungssignal erzeugt, wenn die gesetzte oder vorgegebene Aufschubzeit verstrichen ist.

6. Datenpaket-Vermittlungssystem nach Anspruch 1, 2 oder 3, dadurch gekennzeichnet, daß die Speichereinheit (102) Speicherbereiche hoher und niedriger Priorität aufweist, in denen Daten hoher und niedriger Priorität speicherbar sind, und die Übermittlungssteuereinrichtung (106, 114) ein Datenübermittlungs-Anforderungssignal für die Übermittlung von Daten in einen Speicherbereich hoher und niedriger Priorität ungültig macht, wenn die Übermittlungssteuereinrichtung (106, 114) (eben) Daten in den anderen Speicherbereich hoher und niedriger Priorität überträgt.

7. Datenpaket-Vermittlungssystem nach Anspruch 6, dadurch gekennzeichnet, daß der Aufschubzeitbereich für die Übermittlung von Daten niedriger Priorität einen oberen Grenzwert aufweist, der gleich groß oder größer ist als derjenige für die Übermittlung von Daten hoher Priorität.

8. Datenpaket-Vermittlungssystem nach Anspruch 1, dadurch gekennzeichnet, daß die Übermittlungssteuereinrichtung einen Steuerteil aufweist, der ein Aufschub-Initialisierungssignal in Abhängigkeit von einem Empfang von zu übertragenden Daten (von einer angeschlossenen Datenverarbeitungseinheit) liefert, und die Aufschub-Steuereinrichtung einen Steuerteil aufweist, der eine willkürlich innerhalb des Aufschubzeitbereichs gewählte Aufschubzeit in Abhängigkeit von einem Aufschub-Initialisierungssignal zu zählen beginnt.

**Revendications**

1. Système de transmission par paquets comprenant un canal de données et plusieurs appareils de transmission connectés audit canal de données; chaque appareil de transmission comportant un moyen de mémoire (102), un moyen de commande de réception (104, 110, 112) suivant à recevoir une donnée transmise sur ledit canal de données de la part d'un autre appareil de transmission, afin d'écrire la donnée reçue dans ledit moyen de mémoire (102), et à délivrer un signal de détection de signal porteur, ou porteuse, indiquant la présence d'un signal porteur sur ledit canal de données et un signal de détection de collision indiquant la présence d'au moins deux données sur ledit canal de données, un moyen de commande d'émission (106, 114) servant à lire un paquet dans ledit moyen de mémoire (102), afin de transmettre le paquet sur ledit canal de données en réponse à un signal de demande d'emission de donnée, et à délivrer un signal d'instruction d'attente avant nouvel envoi et interrompre l'émission d'un paquet en réponse à un signal de détection de collision produit par ledit moyen de commande de réception (104, 110, 112), et un moyen de commande d'attente avant nouvel envoi (108; 200) servant à fixer un temps d'attente en réponse à un signal d'instruction d'attente avant nouvel envoi venant dudit moyen de commande d'émission (106, 114) et à délivrer un signal de demande d'émission de donnée audit moyen de commande d'émission (106, 114) lorsque le temps d'attente ainsi fixé s'est écoulé, carctérisé en ce que ledit moyen de commande d'attente avant nouvel envoi (108; 200) détermine sélectivement l'intervalle de temps d'attente en réponse à un signal de détection de collision ou lorsque aucun signal porteur n'a été détecté sur ledit canal de données pendant une durée préétablie et commence le décompte d'un temps d'attente aléatoirement sélectionné à l'intérieur de l'intervalle des temps d'attente en réponse à un signal de demande d'attente avant nouvel envoi venant dudit moyen de commande d'émission (106, 114).

2. Un système de transmission par paquets selon la revendication 1, caractérisé en ce que ledit moyen de commande de réception comporte un convertisseur photo-électrique (110) servant à transformer un signal lumineux reçu par l'intermédiaire dudit canal de données, un détecteur de signal porteur et de collision (112) servant à produire un signal de détection de signal porteur et un signal de détection de collision en fonction d'un signal de sortie dudit convertisseur photo-électrique (110), et une section de commande de réception (104) connectée de façon à recevoir un signal de sortie de la part du convertisseur photo-électrique (110).

3. Système de transmission par paquets selon la revendication 1 ou 2, caractérisé en ce que ledit moyen de commande d'émission comporte une section de commande d'émission (104) servant à transmettre un paquet sur ledit canal de données et un générateur d'instruction (114) servant à produire un signal d'instruction d'attente avant nouvel envoi en réponse à un signal de détection de collision produit par ledit détecteur de signal porteur et de collision (112) pendant l'émission d'un paquet sur ledit canal de données par ladite section de commande d'émission (104).

4. Système de transmission par paquets selon la revendication 1, 2 ou 3, caractérisé en ce que ledit moyen de commande d'attente avant nouvel envoi (108) comporte une section de commande (108A, 108B, 108F) qui augmente l'intervalle de temps d'attente en réponse à un signal de détection de collision et qui diminue l'intervalle de temps d'attente chaque fois qu'aucun signal porteur n'est détecté sur ledit canal de données pendant une durée préétablie, et un circuit minuteur (108C, 108D, 108E) auquel un temps d'attente compris à l'intérieur de l'intervalle de temps d'attente est imposé et qui produit un signal de demande d'émission de données lorsque le temps d'attente imposé s'est écoulé.

5. Système de transmission par paquets selon la revendication 1, 2 ou 3, caractérisé en ce que ledit moyen de commande d'attente avant nouvel envoi (200) comporte un détecteur de temps mort (200A) qui produit un signal de sortie lorsque aucun signal porteur n'est détecté sur ledit canal de données pendant une durée préétablie, un circuit de fixation d'intervalle d'attente (200B, 200C) servant à augmenter l'intervalle de temps d'attente en réponse à un signal de détection de collision et à diminuer l'intervalle de temps d'attente en réponse à un signal de sortie dudit détecteur de temps mort (200A), et un circuit minuteur (200E, 200F) auquel un temps d'attente compris à l'intérieur de l'intervalle de temps d'attente à été imposé et qui produit un signal de demande d'émission de donnée lorsque le temps d'attente imposé s'est écoulé.

6. Circuit de transmission par paquets selon la revendication 1, 2 ou 3, caractérisé en ce que ledit moyen de mémoire (102) possède des zones de mémoire à priorité haute et à priorité basse dans lesquelles sont emmagasinées des données à priorité haute et à priorité basse, et ledit moyen de commande d'émission (106, 114) invalide un signal de demande d'émission de donnée pour émettre une donnée de l'une desdites zones de mémoire à priorité haute et à priorité basse pendant que ledit moyen de commande d'émission (106, 114) est en train d'émettre une donnée de l'autre desdites zones de mémoire à priorité haute et priorité basse.

7. Système de transmission par paquets selon la revendication 6, caractérisé en ce que ledit intervalle de temps d'attente possède une limite supérieure pour l'émission d'une donnée à priorité basse qui est égale ou supérieure à celle relative à l'émission d'une donnée à priorité haute.

8. Système de transmission par paquets selon la revendication 1, caractérisé en ce que ledit moyen de commande d'émission comporte une section de commande qui délivre un signal d'initialisation d'attente en réponse à la réception d'une donnée à émettre (de la part d'une unité de traitement de données connectée), et ledit moyen de commande d'attente avant nouvel envoi comporte une section de commande qui commence à décompter un temps d'attente sélectionné de manière aléatoire à l'intérieur de l'intervalle de temps d'attente en réponse à un signal d'initialisation d'attente.

# F I G. 1

# FIG. 2

```
        ( START )
            |
            v
   +------------------+
   | PERFORM  THE     |
   | CARRIER SENSE    |
   | OPERATION        |
   +------------------+
            |
            v
          / IS  \
         / DATA  BEING \  YES    +------------------+
         \ TRANSMITTED /------->| PUT OFF  THE     |
          \    ?    /            | COMMENCEMENT     |
            |                    | OF PACKET        |
            | NO                 | TRANSMISSION     |
            v                    +------------------+
   +------------------+
   | START  TO        |
   | TRANSMIT  THE    |
   | PACKET           |
   +------------------+
            |
            v
          / IS  \
         / COLLISION \   YES     +----------------------+
         \ DETECTED  /--------->| STOP THE PACKET      |
          \   ?   /              | TRANSMISSION, AND    |
            |                    | PUT OFF  THE         |
            | NO                 | COMMENCEMENT OF      |
            v                    | PACKET  TRANSMIS-    |
   +------------------+          | SION                 |
   | CONTINUE   TO    |          +----------------------+
   | TRANSMIT  THE    |
   | PACKET           |
   +------------------+
            |
            v
        (  END  )
```

# FIG. 3

IDLE/COLLISION

# FIG. 4

# FIG. 5

| | |
|---|---|
| 32 BITS | PRE – BIAS |
| 176 BITS | COLLISION DETECTION |
| 8 BITS | PREAMBLE |
| | DELIMITER |
| | DESTINATION |
| 64 BITS | SOURCE |
| | TYPE |
| 1 K BITS OR 8K BITS | DATA |
| 16 BITS | ERROR CHECK |
| 164 BITS | SILENCE |
| 32 BITS | PRE – BIAS |
| | PREAMBLE |
| 24 BITS | DELIMITER |
| | ACK / NAK |
| 16 BITS | GAP |

4

F I G. 6

0 125 095

# F I G. 7

FIG. 8

A block diagram of a data transmission circuit.

- ACK/NAK GEN. (106F)
- DATA GEN. (106E)
- CRC CIRCUIT (106D)
- SHIFT REGISTER (106C)
- BUFFER REGISTER (106B)
- BUFFER REGISTER (106K)
- BUFFER REGISTER (106J)
- BUFFER REGISTER (106M)
- SELECTOR (106L)
- DMA CONTROL
- MULTIPLEXER (106G)
- SYNCHRONIZING FLIP FLOP (106H)
- PHOTO-ELECTRIC CONVERTER (106I)
- TRANSMISSION CONTROL SEQUENCER (106A)

TO DATA CHANNEL

DATA BUS
ADDRESS BUS

Signals: ANK-TRS, ANK-RS, CSS, CDS, TBSS1, TBSS2, TES, ITS1, ITS2, BIS1, BIS2, DTRS1, DTRS2

FIG. 9

DATA BUS

BUFFER REGISTER ~104J

BUFFER REGISTER ~104H

DMA CONTROL 104K

SHIFT REGISTER 104D

SHIFT REGISTER 104B

FROM CONVERTER 110

ADDRESS BUS

ADDRESS DETECTOR ~104G

DETECTOR ~104C

DATA SIZE DETECTOR ~104E

RECEPTION CONTROL SEQUENCER 104A

CRC CIRCUIT 104F

ANK-TRS  ANK-RS  RES  CDS  CSS  RBSS

ERROR DETECTOR  1041

0 125 095

# F I G. 10

START

WAIT FOR A TRANSMIS-SION REQUEST SIGNAL

ANK — TRS ?

YES → TRANSMIT PREAMBLE AND DELIMITER

TRANSMIT ACK/NAK SIGNAL

NO

CARRIER SENSE ON SIGNAL ? — YES

NO

TRANSMIT CD ZONE SIGNAL

IS CD SIGNAL HIGH ? — YES

NO

IS CD ZONE SIGNAL ENDED ? — NO

YES

TRANSMIT PREAMBLE STARTING DELIMITER

IS CD SIGNAL HIGH ? — YES

NO

IS THE DELIMITER ENDED ? — YES

NO

START TO TRANSMIT THE PACKET DATA

IS CD SIGNAL HIGH ? — YES

NO

IS PACKET DATA ENDED ? — NO

YES

TRANSMIT FCS SIGNAL

STOP THE DATA TRANSMISSION

GENERATE BACK-OFF COMMAND SIGNAL

# F I G. 11A

```
                    ┌─────────┐                           ╭───╮
                    │  START  │                           │ C │
                    └────┬────┘                           ╰─┬─╯
                         │                                  │
          NO        ╱────┴────╲                        ╱────┴────╲
        ┌──────────╱  IS CD    ╲                      ╱   HAS     ╲    YES
        │          ╲ ZONE SIGNAL╱                     ╲ 15μ SEC PASSED╱────┐
        │           ╲ RECEIVED ╱                       ╲    ?    ╱         │
        │            ╲   ?   ╱                           ╲─┬─╱             │
        │             ╲──┬──╱                             │ NO            │
        │                │ YES                            │               │
        │      ┌─────────┴─────────┐              ╱───────┴───────╲   NO  │
        │      │ GENERATE THE CARRIER              ╱     IS          ╲────┤
        │      │ SENSE  ON  SIGNAL │              ╲ STARTING DELIMITER╱   │
        │      └─────────┬─────────┘              ╲   RECEIVED      ╱     │
        │                │                          ╲     ?     ╱         │
        │           ╱────┴────╲      NO               ╲──┬──╱             │
        │          ╱    IS      ╲────────┐              │ YES             │
        │          ╲  COLLISION  ╱       │      ┌───────┴───────┐         │
        │          ╲  DETECTED  ╱      ╭─┴─╮    │ RECEIVE  ACK/NAK        │
        │           ╲    ?    ╱        │ A │    │ SIGNAL        │         │
        │            ╲──┬──╱           ╰───╯    └───────┬───────┘         │
        │               │ YES                          │                 │
        │      ┌─────────┴─────────┐           ┌────────┴────────┐        │
        │      │ SUPPLY A HIGH LEVEL│          │ SUPPLY·AN ACK/NAK│       │
        │      │ COLLISION DETECTION│          │ INFORMATION SIGNAL│      │
        │      │ SIGNAL CDS TO THE │           │ TO THE CONTROL  │        │
        │      │ CONTROL SECTION 106│          │ SECTION 106     │◄───────┘
        │      └─────────┬─────────┘           └─────────────────┘
        │                │
        │  NO       ╱────┴────╲
        │  ┌───────╱   HAS      ╲
        │  │       ╲ 2μ SEC PASSED╱──────┐
        │  │        ╲    ?    ╱           │
        │  │         ╲──┬──╱              │
        │ ╭─┴─╮          │ YES            │
        │ │ B │          │                │
        │ ╰───╯     ╱────┴────╲           │
        │  YES     ╱  CARRIER   ╲         │
        │  ┌──────╱ SENSE ON STATE╲       │
        │  │      ╲     ?     ╱            │
        │  │       ╲──┬──╱                 │
        │  │          │ NO                 │
        │  │  ┌───────┴───────┐            │
        │  │  │ GENERATE THE CARRIER       │
        │  │  │ SENSE OFF SIGNAL│          │
        │  │  │ AFTER AN INTER │           │
        │  │  │ FRAME GAP HAS PASSED       │
        │  │  └───────┬───────┘            │
        │  │          │                    │
        └──┴──────────┴────────────────────┘
```

# F I G. 1 1B

START TO WRITE THE PACKET DATA INTO THE MEMORY 102

HAS 2 μ SEC PASSED ? — YES → B

NO

IS STARTING DELIMITER RECEIVED ? — NO

YES

IS THE MEMORY AREA FOR STORING THE PACKET AVAILABLE ? — NO

YES

DESTINATION ADDRESS = ASSIGNED ADDRESS ? — YES

NO

IS PACKET DATA ENDED? — NO

YES

IS PACKET DATA ENDED? — NO

YES

DESTINATION ADDRESS = BROADCAST ADDRESS ? — NO

YES

CHECK CRC ERROR AND FRAME ERROR

START TO WRITE THE PACKET DATA INTO THE MEMORY 102

SUPPLY A NAK TRANS- MISSION REQUEST SIGNAL TO THE CONTROL SECTION 106

IS PACKET DATA ENDED? — YES

NO

C

# F I G. 12A

0 125 095

```
                        START

         SET THE BACK-OFF
         RANGE BR1 TO 2^N

    INTERRUPTION ?  --YES-->  MULTIPLY BR1 BY 2 AND
                              SELECT A SMALLER ONE
         |NO                  OF 2^X BR1 AND 2^X1

    COLLISION ?  --YES-->

         |NO
                    BACK-OFF COMMAND
                    DUE TO CD
    IS PRESET IDLE TIME          TYPE
    PASSED ?  --NO--        OF INTERRUPTION

         |YES                        BACK-OFF
                        BACK-OFF     INITIALIZATION
    DIVIDE BR1 BY 2 AND  TIME OUT
    SELECT A LARGER ONE
    OF BR1/2 AND 2^Y1   SUPPLY DTRS1 TO
                        TRANSMISSION CONTROL
                        SECTION 106

                        GENERATE A RANDOM
                        NUMBER WITHIN THE BACK-
                        OFF TIME RANGE AND
                        SET THE RANDOM NUMBER
                        TO THE TIMER COUNTER
                        108D
```

# F I G. 12B

```
                    ┌─────────┐
                    │  START  │
                    └─────────┘
                         │
    ┌────────────────────────────────────────────────────┐
    │                    │                                │
    │        ┌───────────────────────┐                    │
    │        │  SET THE BACK-OFF     │                    │
    │        │  RANGE BR2 TO 2^N     │                    │
    │        └───────────────────────┘                    │
    │                    │                                │
    │                    ▼                                │
    │            ◇ INTERRUPTION ◇──YES──► MULTIPLY BR2    │
    │            ◇      ?       ◇         BY 2 AND        │
    │                    │NO              SELECT A         │
    │                    ▼                SMALLER ONE      │
    │            ◇  COLLISION  ◇──YES──   OF 2^X BR2      │
    │            ◇      ?      ◇          AND 2^X2        │
    │                    │NO                              │
    │        ◇    IS PRESET   ◇  NO                       │
    │     ◄──◇  IDLE TIME      ◇                          │
    │        ◇   PASSED ?     ◇                           │
```

SET THE BACK-OFF RANGE BR2 TO $2^N$

INTERRUPTION ? — YES

MULTIPLY BR2 BY 2 AND SELECT A SMALLER ONE OF $2^X$BR2 AND $2^{X2}$

NO

COLLISION ? — YES

NO

IS PRESET IDLE TIME PASSED ? — NO

BACK-OFF COMMAND DUE TO CD

TYPE OF INTERRUPTION

YES

DIVIDE BR2 BY 2 AND SELECT A LARGER ONE OF BR2/2 AND $2^{Y2}$

BACK-OFF TIME OUT

BACK-OFF INITIALIZATION

SUPPLY DTRS2 TO TRANSMISSION CONTROL SECTION 106

GENERATE A RANDOM NUMBER WITHIN THE BACK-OFF TIME RANGE AND SET THE RANDOM NUMBER TO THE TIMER COUNTER 108E

F I G. 13

0 125 095